# EUROPÄISCHE PATENTSCHRIFT

(11) **EP 2 962 162 B1**
(45) Veröffentlichungstag und Bekanntmachung des Hinweises auf die Patenterteilung: **05.12.2018**
(21) Anmeldenummer: 14700470.9
(22) Anmeldetag: 13.01.2014
(51) Int. Cl.: G05B 19/042

(54) **VERFAHREN ZUR EINRICHTUNG ODER AKTUALISIERUNG EINER PROGRAMMIERUNG EINES STEUERGERÄTES EINES VERKEHRSMITTELS**
METHOD FOR SETTING UP AND/OR IMPLEMENTING A PROGRAMMING PROCESS OF A CONTROL DEVICE OF A TRANSPORT MEANS
PROCÉDÉ POUR LA MISE EN PLACE ET/OU LA MISE À JOUR D'UNE PROGRAMMATION D'UN APPAREIL DE COMMANDE D'UN MOYEN DE TRANSPORT

(30) Priorität: 27.02.2013 DE 102013003271
(43) Veröffentlichungstag der Anmeldung: 06.01.2016
(73) Patentinhaber: Volkswagen Aktiengesellschaft, 38440 Wolfsburg (DE)
(72) Erfinder: DRÄGER, Mark, 38350 Helmstedt (DE); PATEMOSTER, Luc, 38165 Lehre (DE); JOHN, Michael, 39291 Lostau (DE)
(86) Internationale Anmeldenummer: PCT/EP2014/050492
(87) Internationale Veröffentlichungsnummer: WO 2014/131538

(56) Entgegenhaltungen:
- WO-A1-2012/015439
- DE-A1- 10 152 508
- Cornelia Heinisch ET AL: "Telematikmoderierter Software-Download in Kfz-Steuergeräte", Vortrag auf dem Entwicklerforum Kfz-Elektronik, Ludwigsburg, Germany, 31 May 2003 (2003-05-31), pages 1-10, XP055339620, Retrieved from the Internet: URL:http://www.it-designers-gruppe.de/uplo ads/media/Heinisch-Telematik_SW_Download.p df [retrieved on 2017-01-27]

## Beschreibung

### Stand der Technik

Die vorliegende Erfindung betrifft ein Verfahren zur Einrichtung und bzw. oder Aktualisierung einer Programmierung eines Steuergerätes eines Verkehrsmittels, ein derartiges Steuergerät, ein Verkehrsmittel mit einem derartigen Steuergerät sowie ein System mit einem derartigen Steuergerät.

Moderne Verkehrsmittel wie Kraftfahrzeuge weisen immer mehr elektronische Komponenten mit jeweiligen Steuergeräten auf. Diese müssen passend zu dem jeweiligen Verkehrsmitteltyp, dessen Ausstattung und ggfs. auch zu den anderen verwendeten Komponenten programmiert und mit Daten (z.B. Software) versehen, d.h. eingerichtet oder auch bedatet werden. Hierzu müssen die einzelnen Steuergeräte an eine Datenquelle wie z.B. ein externes Diagnosegerät angeschlossen und dann die passenden Programmierdaten jeweils ausgesucht und aufgespielt werden. Ferner gibt es Verkehrsmittel, bei denen alle Steuergeräte durch einen gemeinsamen Kommunikations-Bus wie z.B. einen CAN-Bus (Controller Area Network Bus) verbunden sind, der eine zentrale Schnittstelle wie z.B. einen CAN-Diagnoseanschluss aufweist, um mit externen Einheiten kommunizieren zu können. Werden die Steuergeräte über die Schnittstelle und den Kommunikations-Bus eingerichtet, müssen ebenfalls die hierzu erforderlichen Daten einzeln ausgesucht und auf die entsprechenden Steuergeräte übertragen werden.

Die erste Einrichtung oder Bedatung (Programmierung) der Steuergeräte erfolgt üblicherweise während der Herstellung des Verkehrsmittels. Hierzu werden im Allgemeinen mobile Rechner verwendet, die z.B. direkt über ein OBD-Kabel (On-Board-Diagnose) die erforderlichen Daten auf die einzelnen Steuergeräte des Verkehrsmittels aufspielen. Diese Programmierdaten können auf dem mobilen Rechner vorhanden sein oder während der Einrichtung über eine Kommunikationsverbindung auf diesen übertragen werden. Dies kann über Kabel oder drahtlos, z.B. über WLAN, erfolgen.

Nachteilig ist hierbei, dass die Verbindung des mobilen Rechners zur Schnittstelle des Verkehrsmittels bzw. die Kommunikationsverbindung zum mobilen Rechner für die Dauer der Einrichtung bestehen bleiben muss, bis die Einrichtung abgeschlossen ist; unvollständige Programmierdaten müssten später nachträglich mit entsprechendem Aufwand aufgespielt werden. Dabei hängt die Dauer der Einrichtung neben der Menge der Programmierdaten auch von den Datenübertragungsraten des Kommunikations-Buses bzw. der einzelnen Steuergeräte ab; diese sind jedoch auf die Datenmengen ihres regulären Betriebes und weniger auf den einmaligen Ersteinrichtungsvorgang ausgelegt, was die Dauer der Einrichtung erhöht. Der Vorgang der Einrichtung kann daher die Herstellungsabläufe stören, z.B. durch die Anwesenheit des mobilen Rechners und ggfs. seiner Kabelverbindung, insbesondere über mehrere Produktionsschritte. Auch können drahtlose Kommunikationsverbindungen z.B. innerhalb einer Produktionsstraße nur begrenzte Reichweiten und Datenraten aufweisen. Ferner sind desto mehr mobile Rechner erforderlich, je mehr Daten übertragen werden müssen, d.h. je länger die Einrichtung jeweils dauert und die Anwesenheit eines mobilen Rechners erfordert. Diese müssen nicht nur beschafft sondern auch instandgehalten werden. Mit zunehmender Komplexität der elektronischen Komponenten der Verkehrsmittel in Form von mehr und aufwendigeren Steuergeräte steigen auch der Aufwand der Einrichtung und damit die Anzahl mobiler Rechner. Somit können mit der Zunahme der Elektronik und deren Komplexität und Leistungsfähigkeit in den Verkehrsmitteln die bisherigen Verfahren zur Einrichtung der Steuergeräte zu Verzögerungen oder Kostensteigerungen in der Herstellung führen. Maßnahmen, mehr mobile Rechner zu verwenden, die jeweils länger zur Einrichtung eines Produktes eingesetzt werden, oder die Datenübertragungsraten zwischen mobilem Rechner und Verkehrsmittel zu steigern, um mehr Daten in weniger Zeit aufspielen zu können, lösen diese Probleme nur bedingt und haben auch ihre Grenzen.

Die DE 101 52 508 A1 betrifft ein Verfahren zur Aktivierung eines Systems mit einem zeitgesteuerten Kommunikationssystem zur Steuerung bzw. Regelung von Betriebsabläufen in einem Kraftfahrzeug. Für Steuergeräte mit gleichem Aufbau und identischer Programmierung wie z.B. der elektromechanischen Bremse (EMB), die pro Rad ein Steuergerät aufweist, kann der Teil der Programmierung, der für alle Steuergeräte identisch und für die zeitgesteuerte Kommunikation erforderlich ist, in einem Zentralspeicher abgelegt und bei der Aktivierung des Systems von dort über das zeitgesteuerte Kommunikationssystem in einen flüchtigen Speicher der einzelnen Steuergeräte übertragen, d.h. kopiert werden. Zur sicheren und zuverlässigen Aktivierung wird das System zunächst eingeschaltet und ein beliebiges der identischen Steuergeräte vorübergehend als Mastersteuergerät betrieben, welches die Übertragung der erforderlichen und für alle Steuergeräte identischen Daten aus einem Zentralspeicher eines der Steuergeräte an alle Steuergeräte koordiniert.

Cornelia Heinisch, Martin Simons: "Telematikmoderierter Software-Download in Kfz-Steuergeräte", Vortrag auf dem Entwicklerforum Kfz-Elektronik, Ludwigsburg, Germany, Mai 2003, Seiten 1-10" offenbart eine Softwarearchitektur für einen telematik-moderierten Software-Download, der es erlaubt, die Steuergeräte eines Kraftfahrzeugs durch eine Software-Komponente, die sich in einem Telematik-Steuergerat befindet, zu aktualisieren. Die Architektur erlaubt den Download der Flashware-Module in das Fahrzeug über beliebige drahtgebundene oder drahtlose Übertragungsmedien sowie über Datenträger.

Es ist eine Aufgabe der vorliegenden Erfindung, die vorgenannten Nachteile auszuräumen. Insbesondere soll ein Verfahren bereitgestellt werden, die Einrichtung bzw. Aktualisierung von Steuergeräten für ein Verkehrsmittel zu beschleunigen bzw. zu vereinfachen. Dabei kann das Steuergerät für ein Verkehrsmittel insbesondere bereits im Verkehrsmittel angeschlossen sein (im Sinne eines "Steuergerätes eines Verkehrsmittels").

### Offenbarung der Erfindung

Die vorstehend genannte Aufgabe wird erfindungsgemäß durch ein Verfahren mit den Merkmalen gemäß Anspruch 1, ein Steuergerät mit den Merkmalen nach Anspruch 6, ein Verkehrsmittel mit den Merkmalen nach Anspruch 9 und ein System mit den Merkmalen nach Anspruch 10 gelöst. Die Unteransprüche und Figuren zeigen bevorzugte Weiterbildungen der Erfindung.

Somit betrifft die vorliegende Erfindung ein Verfahren zur Einrichtung und bzw. oder Aktualisierung einer Programmierung eines zweiten Steuergerätes eines Verkehrsmittels, insbesondere während der Produktion, mit den Schritten:
- Betreiben eines ersten Steuergerätes des Verkehrsmittels in einem ersten Funktionsumfang zur Einrichtung und bzw. oder Aktualisierung einer Programmierung eines zweiten Steuergerätes des Verkehrsmittels,
- Einrichten oder Aktualisieren einer Programmierung des zweiten Steuergerätes durch das erste Steuergerät, und
- Einrichten des ersten Steuergerätes für einen zweiten Funktionsumfang.

Unter einer Programmierung ist z.B. Software zu verstehen, die den Betrieb des jeweiligen Steuergerätes zumindest teilweise durchführt, z.B. auf eingehende Informationen reagiert, ausgehende Informationen erzeugt und auf gespeicherte Daten zugreift, diese erzeugt und bzw. oder diese verändert; diese Software unterscheidet sich von Daten wie Parametern etc., die durch Software z.B. ausgelesen, benutzt und gespeichert werden, jedoch selbst keine Funktionen durchführen können. Mit anderen Worten sollen unter einer Programmierung Anweisungen oder Betriebssystemabläufe und dergleichen verstanden werden, d.h. jegliche Art von Software, die Funktionen ausüben kann. Entsprechend ist unter Einrichtung eine (erstmalige) Herstellung des softwareseitig betriebenen Funktionsumfangs eines Steuergerätes und unter Aktualisieren eine Veränderung eines vorhandenen softwareseitig betriebenen Funktionsumfangs zu verstehen. Ein Funktionsumfang umfasst alle Funktionen, die gemeinsam durch das Steuergerät ausgeführt werden können. Zwei Funktionsumfänge unterscheiden sich somit nach Sprache der vorliegenden Erfindung dadurch voneinander, dass sie nicht gleichzeitig ausgeführt werden können, z.B. weil sie dann um einzelne Elemente des Steuergerätes wie z.B. Prozessor, Speicher, Schnittstellen konkurrieren würden.

Der erste Funktionsumfang des ersten Steuergerätes umfasst somit alle Funktionen, die erforderlich sind, eine Software-Einrichtung bzw. -Aktualisierung eines zweiten Steuergerätes oder noch weiterer Steuergeräte durchzuführen, wohingegen der zweite Funktionsumfang des ersten Steuergerätes eben genau diese Funktionen nicht mehr ausführen kann; stattdessen wird das erste Steuergerät gemäß dem zweiten Funktionsumfang so betrieben, wie es für den regulären Betrieb des Verkehrsmittel vorgesehen ist, z.B. als zentrales Gateway-Steuergerät oder Motorsteuergerät. Mit anderen Worten umfasst der zweite Funktionsumfang Fahrzeugfunktionen.

Der vorliegenden Erfindung liegt die Erkenntnis zugrunde, dass ein Steuergerät eines Verkehrsmittel zur Einrichtung bzw. Aktualisierung weiterer Steuergeräte des Verkehrsmittels zeitweise umfunktioniert oder umgewidmet werden kann, um innerhalb der verbundenen Steuergeräte deren Einrichtung bzw. Aktualisierung zu übernehmen und danach erstmalig oder erneut, vorzugsweise erstmalig, seine eigentliche Funktion auszuführen. Hierdurch kann auf zusätzliche externe Datenquelle wie Datenverarbeitungsanlagen oder Datenspeicher, die ausschließlich die Einrichtung bzw. Aktualisierung der Steuergeräte vornehmen, verzichtet werden; bisher waren derartige externe Datenverarbeitungsanlagen wie OBD-Diagnosegeräte oder Datenspeicher zu diesem Zweck und für die Dauer z.B. der Produktion oder der Wartung des Verkehrsmittels von außen an dieses angeschlossen. Es kann daher die Zeitdauer des externen Anschlusses reduziert werden, in dem die externe Datenquelle zunächst nur ein Steuergerät einrichtet bzw. aktualisiert und dieses dann die Einrichtung bzw. Aktualisierung weiterer Steuergeräte des Verkehrsmittels übernimmt; die externen Datenverarbeitungsanlagen oder Datenspeicher könnte in der Zwischenzeit wieder entfernt und z.B. am nächsten Verkehrsmittel verwendet werden.

Hierbei könnten einerseits erst alle zur Einrichtung bzw. Aktualisierung erforderlichen Daten vollständig auf das erste Steuergerät übertragen werden, dann kann die Kommunikationsverbindung zur externen Datenquelle getrennt werden und anschließend die Einrichtung bzw. Aktualisierung des zweiten Steuergerätes und aller weiteren betroffenen Steuergeräte durch das erste Steuergerät erfolgen. Andererseits kann auch parallel zur Datenübertragung von der externen Datenquelle auf das erste Steuergerät dieses bereits damit beginnen, seinerseits die Einrichtung bzw. Aktualisierung des zweiten Steuergerätes und ggfs. weiterer Steuergeräte durchzuführen, und diese Tätigkeit fortsetzen, nachdem die Kommunikationsverbindung zum externen Steuergerät getrennt wurde. In beiden Fällen kann das erste Steuergerät von der externen Datenquelle ebenfalls die erforderlichen Daten (z.B. in Form von Software-Paketen) erhalten, um sich selbst auf seinen eigentlichen Funktionsumfang wie z.B. Gateway oder Motorsteuergerät umzuprogrammieren bzw. umzuwidmen, nachdem es seine Aufgabe der Einrichtung bzw. Aktualisierung weiterer Steuergeräte abgeschlossen hat. Jedoch ist es grundsätzlich auch möglich, den Software-Code für den zweiten (eigentlichen) Funktionsumfang im ersten Steuergerät bereits zu einem Zeitpunkt vorzuhalten, während es für den ersten Funktionsumfang eingerichtet ist bzw. diesen ausführt. Die "Einrichtung" des ersten Steuergerätes kann daher erfindungsgemäß auch einfach darin bestehen, entsprechenden Software-Code für den zweiten Funktionsumfang zu aktivieren, indem er ausführbar gemacht, also beispielsweise in einen Arbeitsspeicher o.ä. geladen wird. Hierdurch kann die Ausführbarkeit des ersten Funktionsumfangs beendet werden.

Vorzugsweise weist das Verfahren ferner den Schritt auf:
- Einrichten oder Aktualisieren einer Programmierung des ersten Steuergerätes mittels einer externen Datenverarbeitungsanlage oder einem externen Datenspeicher.

Eine solche externe Datenverarbeitungsanlage kann z.B. ein OBD-Diagnosegerät sein, wie es bei der Produktion oder Wartung von Verkehrsmittel eingesetzt wird. Ein Datenspeicher kann z.B. ein Flash-Speicher sein, solange dort Software hinterlegt sein kann, die zur Einrichtung bzw. Aktualisierung erforderlich ist. Beide Vorrichtungen können direkt oder auch indirekt z.B. über einen Kommunikations-Bus wie z.B. einen CAN-Bus des Verkehrsmittels mit dem ersten Steuergerät verbunden werden. Dabei kann eine Kommunikationsverbindung zwischen der externen Datenverarbeitungsanlage oder dem externen Datenspeicher durch direkte Verbindung wie z.B. Einstecken auf eine Schnittstelle oder ein Steuergerät des Verkehrsmittels sowie indirekt kabelgebunden oder drahtlos hergestellt werden. Auch kann die externe Datenquelle über einen z.B. CAN-Bus des Verkehrsmittels mit dem ersten Steuergeräte verbunden werden. Vorteilhaft ist es, derartige externe Datenquellen zur Einrichtung oder Aktualisierung eines ersten Steuergerätes zu verwenden, weil diese bereits in der Produktion für die Einrichtung bzw. Aktualisierung aller Steuergeräte verwendet werden.

Vorzugsweise weist das Verfahren ferner den Schritt auf:
- Trennen einer Kommunikationsverbindung zwischen der externen Datenverarbeitungsanlage oder dem externen Datenspeicher und dem ersten Steuergerät, bevor das Einrichten oder Aktualisieren einer Programmierung des zweiten Steuergerätes durch das erste Steuergerät begonnen hat oder abgeschlossen ist.

Es entspricht dem Gedanken der Erfindung, die Dauer der Kommunikationsverbindung zwischen Steuergeräten und externer Datenquelle zu reduzieren, damit die externe Datenquelle schneller wieder anderweitig verwendet werden kann. Entsprechend wird gemäß diesem Merkmal der Erfindung die Software, die zur Einrichtung bzw. Aktualisierung des zweiten Steuergerätes erforderlich ist, von der externen Datenquelle so auf das erste Steuergerät übertragen, dass die Kommunikationsverbindung zu der externen Datenquelle getrennt werden kann, noch bevor die Einrichtung bzw. Aktualisierung des zweiten Steuergerätes durch das erste Steuergerät begonnen hat oder abschlossen ist. Dies bedeutet, dass die externe Datenquelle für die Einrichtung bzw. Aktualisierung des zweiten Steuergerätes nicht mit dem Verkehrsteilnehmer verbunden bleiben muss, um diese durchzuführen. Mit anderen Worten dauert die Einrichtung bzw. Aktualisierung des zweiten Steuergerätes durch das erste Steuergerät noch an bzw. hat noch gar nicht begonnen, wenn die Kommunikationsverbindung getrennt wird, wodurch die externe Datenquelle anderweitig verwendet werden kann. Hierdurch wird eine Beschleunigung des Ablaufs der Einrichtung bzw. Aktualisierung erreicht.

Vorzugsweise weist das Verfahren ferner den Schritt auf:
- Erkennen des zweiten Steuergerätes als einzurichtendes oder zu aktualisierendes Steuergerät durch das erste Steuergerät.

Dies bedeutet, dass während des Montageprozesses das erste Steuergerät frühzeitig eingerichtet werden kann, weitere Steuergeräte einzurichten bzw. zu aktualisieren. Sobald ein weiteres Steuergerät im Verkehrsmittel angeschlossen wird, wird dieses durch das erste Steuergerät erkannt und eingerichtet bzw. aktualisiert. So kann eine externe Datenquelle frühzeitig während der Herstellung an das erste Steuergerät angeschlossen werden und dieses zur Einrichtung aller weiteren Steuergeräte sowie sich selbst befähigen. Das erste Steuergerät würde dann sukzessive alle weiteren Steuergeräte einrichten, sobald diese angeschlossen werden, und zum Schluss sich selbst auf seinen eigentlichen (finalen) Funktionsumfang einrichten. Auf diese Weise müsste die externe Datenquelle nur zu Beginn der Produktion mit dem ersten Steuergerät verbunden werden. Auch könnte das erste Steuergerät bereits wie zuvor beschrieben eingerichtet werden, bevor es selbst in dem Verkehrsmittel montiert und angeschlossen wird. In diesem Fall könnte auch das Steuergerät an eine ggfs. stationäre externe Datenquelle angeschlossen werden und nach Abschluss seiner Einrichtung zu dem sich in der Montage befindlichen Verkehrsmittel transportiert werden. Dabei könnte die Einrichtung des ersten Steuergerätes auch beim Steuergerätehersteller bzw. im Steuergerätewerk und der Einbau des ersten Steuergerätes beim Verkehrsmittelhersteller bzw. im Verkehrsmittelwerk erfolgen.

Vorzugsweise weist das Verfahren ferner die Schritte auf:
- Betreiben des zweiten Steuergerätes in einem ersten Funktionsumfang zur Einrichtung und bzw. oder Aktualisierung einer Programmierung eines dritten Steuergerätes des Verkehrsmittels,
- Einrichten oder Aktualisieren einer Programmierung des dritten Steuergerätes durch das zweite Steuergerät, und
- Einrichten des zweiten Steuergerätes für einen zweiten Funktionsumfang.

Auf diese Weise kann der erfindungsgemäße Gedanke auch auf die Einrichtung und Umwidmung weiterer Steuergeräte des Verkehrsmittels übertragen werden, indem auch das zweite Steuergerät zuerst zur Einrichtung eines weiteren Steuergerätes oder mehrerer weiterer Steuergeräte verwendet und danach auf seinen eigentlichen Funktionsumfang eingerichtet bzw. umgewidmet wird, z.B. durch sich selbst oder durch das erste Steuergerät. Hierdurch können die Einrichtungsvorgänge innerhalb des Verbundes von Steuergeräten innerhalb des Verkehrsmittels weiter beschleunigt werden.

Gemäß einem weiteren Aspekt betrifft die vorliegende Erfindung auch ein Steuergerät für ein Verkehrsmittel, welches in einem ersten Funktionsumfang eingerichtet ist, eine Programmierung wenigstens eines zweiten Steuergerätes des Verkehrsmittels einzurichten oder zu aktualisieren.

Vorzugsweise kann das erste Steuergerät über einen Kommunikations-Bus mit dem zweiten Steuergerät verbunden werden und weist eine Schnittstelle zur Herstellung einer Kommunikationsverbindung mit einer externen Datenverarbeitungsanlage oder einem externen Datenspeicher auf, wobei die Schnittstelle eine höhere Datenübertragungsrate als der Kommunikations-Bus aufweist. Ein solcher Kommunikations-Bus kann z.B. ein CAN-Bus sein, wie er in Verkehrsmitteln zur Kommunikation zwischen Steuergeräten und weiteren Komponenten verwendet wird. Dieser ist üblicherweise auf eine Datenübertragungsrate ausgelegt, wie sie für den regulären Betrieb des Verkehrsmittels erforderlich bzw. ausreichend ist. Um den Vorgang der (Erst-)Einrichtung bzw. Aktualisierung der Steuergeräte möglichst schnell durchführen zu können, ist jedoch eine höhere Datenübertragungsrate zwischen der externen Datenverarbeitungsanlage oder dem externen Datenspeicher und dem ersten Steuergerät erforderlich. Daher ist es vorteilhaft, zu diesem Zweck eine direkte Schnittstelle an dem ersten Steuergerät vorzusehen, welche eine höhere Datenübertragungsrate aufweist als der CAN-Bus, damit die für die Einrichtung bzw. Aktualisierung aller Steuergeräte erforderlichen Daten möglichst schnell auf das erste Steuergerät übertragen und dann die externe Datenverarbeitungsanlage oder der externe Datenspeicher wieder entfernt werden kann, während erst danach oder dann noch andauernd die Einrichtung bzw. Aktualisierung der weiteren Steuergeräte über den CAN-Bus erfolgt. Auf diese Weise wirkt sich die geringere Datenübertragungsrate des CAN-Busses nicht hinderlich auf das erfindungsgemäße Verfahren aus.

Vorzugsweise ist das Steuergerät ein Gateway-Steuergerät oder ein Motorsteuergerät und bzw. oder weist das erste Steuergerät zur Speicherung von der externen Datenverarbeitungsanlage oder dem externen Datenspeicher auf das erste Steuergerät übertragener Daten zur Einrichtung und bzw. oder Aktualisierung weiterer Steuergeräte einen Speicher auf oder ist mit einem internen Speicher verbunden. Ein Gateway-Steuergerät oder ein Motorsteuergerät als erstes Steuergerät zu verwenden ist vorteilhaft, weil diese Steuergeräte sehr leistungsstark hinsichtlich ihrer Rechnerleistung sind und daher das erfindungsgemäße Verfahren auf ihnen einfach umsetzbar ist. Ferner werden diese Steuergeräte sehr frühzeitig in dem Verkehrsmittel montiert. Einen Speicher innerhalb des Verkehrsmittels zu verwenden ist vorteilhaft, weil hierdurch die Daten, die zur Einrichtung bzw. Aktualisierung aller Steuergeräte erforderlich sind, in dem Verkehrsmittel vorgehalten und die externe Datenquelle wieder entfernt werden kann, noch bevor die Verwendung dieser Daten zur Einrichtung bzw. Aktualisierung innerhalb des Verkehrsmittels abgeschlossen ist.

Gemäß einem weiteren Aspekt betrifft die vorliegende Erfindung auch ein Verkehrsmittel, insbesondere ein Fahrzeug, mit einem Steuergerät wie zuvor beschrieben.

Gemäß einem weiteren Aspekt betriff die vorliegende Erfindung auch ein System mit einem Steuergerät für ein Verkehrsmittel wie zuvor beschrieben, einer externen Datenverarbeitungsanlage oder einem externen Datenspeicher und einem Kommunikations-Bus des Verkehrsmittels, der das Steuergerät und die externe Datenverarbeitungsanlage oder den externen Datenspeicher miteinander verbindet. Es ist auch vom Gedanken der vorliegenden Erfindung umfasst, die externe Datenverarbeitungsanlage oder den externen Datenspeicher direkt an den CAN-Bus als weiteren Bus-Teilnehmer anzuschließen, z.B. über einen Adapter in Form eines CAN-Controllers, um am CAN-Bus selbsttätig teilnehmen und seine Daten dem ersten Steuergerät zur Verfügung stellen zu können, welches dann die Einrichtung bzw. Aktualisierung weiterer Steuergeräte vornehmen kann, sobald diese als einzurichtende bzw. zu aktualisierende Steuergeräte am CAN-Bus erkannt werden. Auf diese Weise kann auf eine zu diesem Zweck vorzusehende Schnittstelle an dem ersten Steuergerät verzichtet werden, da es stets möglich ist, z.B. über eine CAN-Bus-Schnittstelle wie den CAN-Diagnoseanschluss zur Verbindung mit einem externen Diagnosegerät einen weiteren Teilnehmer an den CAN-Bus anzuschließen.

### Kurze Beschreibung der Zeichnungen

Nachfolgend werden Ausführungsbeispiele der Erfindung unter Bezugnahme auf die begleitenden Zeichnungen im Detail beschrieben. In den Zeichnungen ist:
- Figur 1: eine schematische Darstellung eines Verkehrsmittels mit einer Steuergerätearchitektur gemäß einem ersten Ausführungsbeispiel der vorliegenden Erfindung;
- Figur 2: eine schematische Darstellung eines Verkehrsmittels mit einer Steuergerätearchitektur gemäß einem zweiten Ausführungsbeispiel der vorliegenden Erfindung; und
- Figur 3: ein Ablaufdiagramm eines erfindungsgemäßen Verfahrens.

### Ausführungsbeispiele der Erfindung

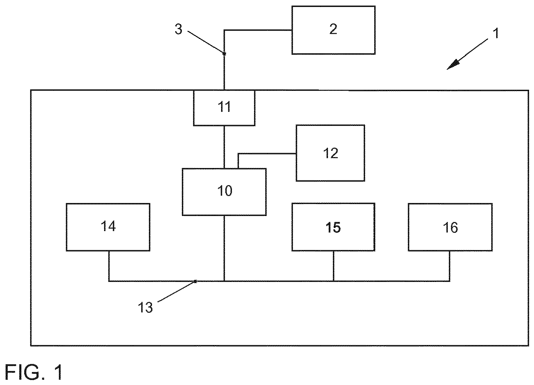

Figur 1 zeigt eine schematische Darstellung eines Verkehrsmittels 1 mit einer Steuergerätearchitektur gemäß eines ersten Ausführungsbeispiels der vorliegenden Erfindung. Das Verkehrsmittel 1 weist eine Mehrzahl von Steuergeräten 10, 14, 15, 16 auf, die über einen Kommunikations-Bus 13 miteinander verbunden sind. Ein erstes Steuergerät 10 ist mit einem Speicher 12 zur Speicherung von Daten und einer Schnittstelle 11 verbunden, die über eine Kommunikationsverbindung 3 mit einer externen Datenquelle 2 wie einer externen Datenverarbeitungsanlage oder einem externen Datenspeicher verbunden werden kann. Dabei weist die Kommunikationsverbindung 3 eine höhere Datenübertragungsrate auf als der Kommunikations-Bus 13.

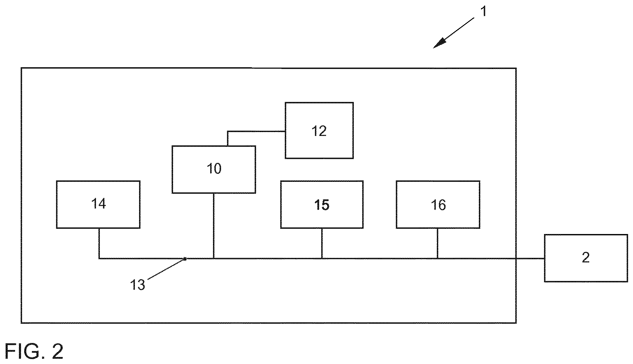

Figur 2 zeigt eine schematische Darstellung eines Verkehrsmittels 1 mit einer Steuergerätearchitektur gemäß eines zweiten Ausführungsbeispiels der vorliegenden Erfindung. Diese unterscheidet sich lediglich dadurch von der Architektur des ersten Ausführungsbeispiels, dass die externe Datenquelle 2 als weiterer Teilnehmer direkt mit dem Kommunikations-Bus 13 verbunden ist, z.B. über eine Bus-Schnittstelle, die dem Anschluss von z.B. Diagnosegeräten dienen kann. Die Schnittstelle 11 entfällt hierdurch. Die Kommunikationsverbindung 3 entspricht der Kommunikationsverbindung über den Kommunikations-Bus 13.

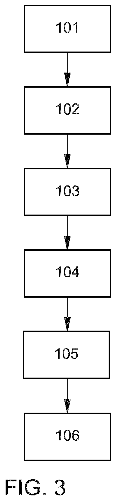

Figur 3 zeigt ein Ablaufdiagramm eines erfindungsgemäßen Verfahrens, welches auf beide Ausführungsbeispiele der Steuergerätearchitektur angewendet werden kann. In einem ersten Schritt 101 wird die Kommunikationsverbindung 3 zwischen der externen Datenquelle 2 und dem ersten Steuergerät 10 hergestellt. Über diese Kommunikationsverbindung 3 wird in einem zweiten Schritt 102 das erste Steuergerät 10 durch die externe Datenquelle 2 in einem ersten Funktionsumfang eingerichtet, um weitere Steuergeräte 14, 15, 16 in deren Funktionsumfängen einrichten zu können. Wird in einem dritten Schritt 103 ein weiteres, zweites Steuergerät 14 als einzurichtendes Steuergerät 14 durch das erste Steuergerät 10 erkannt, so führt das erste Steuergerät 10 die Einrichtung des zweiten Steuergerätes 14 in dessen Funktionsumfang in einem vierten Schritt 104 durch. In einem fünften Schritt 105 wird die Kommunikationsverbindung 3 zu der externen Datenquelle 2 wieder getrennt. Dabei erfolgt dieser fünfte Schritt parallel oder vor dem vierten Schritt 104, so dass die Einrichtung des zweiten Steuergerätes 14 noch nicht begonnen hat oder noch nicht abgeschlossen ist, wenn die Kommunikationsverbindung 3 getrennt wird. Hierdurch kann erfindungsgemäß die externe Datenquelle 2 wieder anderweitig verwendet werden, während die Einrichtung der Steuergeräte 14, 15, 16 noch andauert. In einem sechsten Schritt 106 wird schließlich das erste Steuergerät 10 in seinen zweiten, eigentlichen Funktionsumfang eingerichtet, nachdem das erste Steuergerät 10 keine weiteren Steuergeräte 14, 15, 16 mehr einrichten muss. Dies kann durch das Steuergerät 10 selbst oder auch durch eines der anderen Steuergeräte 14, 15, 16 erfolgen.

Auch wenn die erfindungsgemäßen Aspekte und vorteilhaften Ausführungsbeispiele anhand der in Verbindung mit den beigefügten Zeichnungen erläuterten Ausführungsbeispiele im Detail beschrieben worden sind, sind für den Fachmann Modifikationen und Kombinationen von Merkmalen der dargestellten Ausführungsbeispiele möglich, ohne den Bereich der vorliegenden Erfindung zu verlassen, deren Schutzbereich durch die beigefügten Ansprüche definiert wird.

## Patentansprüche

1. Verfahren zur Einrichtung und/oder Aktualisierung einer Programmierung eines zweiten Steuergerätes (14, 15, 16) eines Verkehrsmittels (1), insbesondere während der Produktion des Verkehrsmittels (1), mit den Schritten:
Betreiben eines ersten Steuergerätes (10) des Verkehrsmittels (1) in einem ersten Funktionsumfang zur Einrichtung und/oder Aktualisierung der Programmierung des zweiten Steuergerätes (14, 15, 16) des Verkehrsmittels (1),
Einrichten oder Aktualisieren (104) der Programmierung des zweiten Steuergerätes (14, 15, 16) durch das erste Steuergerät (10),
**gekennzeichnet durch**
Einrichten (106) des ersten Steuergerätes (10) für einen zweiten Funktionsumfang, wobei der zweite Funktionsumfang die Funktionen des ersten Funktionsumfangs nicht mehr ausführen kann und stattdessen das erste Steuergerät (10) gemäß dem zweiten Funktionsumfang erstmalig oder erneut Funktionen umfasst, wie sie für einen regulären Betrieb des Verkehrsmittels (1) vorgesehen sind.

2. Verfahren nach Anspruch 1, ferner mit dem Schritt:
Einrichten oder Aktualisieren (102) einer Programmierung des ersten Steuergerätes (10) mittels einer externen Datenverarbeitungsanlage (2) oder einem externen Datenspeicher (2).

3. Verfahren nach Anspruch 2, ferner mit den Schritten:
Trennen (105) einer Kommunikationsverbindung (3) zwischen der externen Datenverarbeitungsanlage (2) oder dem externen Datenspeicher (2) und dem ersten Steuergerät (10), bevor das Einrichten oder Aktualisieren (104) der Programmierung des zweiten Steuergerätes (14, 15, 16) durch das erste Steuergerät (10) abgeschlossen ist.

4. Verfahren nach einem der vorherigen Ansprüche, ferner mit dem Schritt:
Erkennen (103) des zweiten Steuergerätes (14, 15, 16) als einzurichtendes oder zu aktualisierendes Steuergerät (14, 15, 16) durch das erste Steuergerät (10).

5. Verfahren nach einem der vorherigen Ansprüche, ferner mit den Schritten:
Betreiben des zweiten Steuergerätes (14, 15, 16) in einem ersten Funktionsumfang zur Einrichtung und/oder Aktualisierung einer Programmierung eines dritten Steuergerätes (14, 15, 16) des Verkehrsmittels (1),
Einrichten oder Aktualisieren der Programmierung des dritten Steuergerätes (14, 15, 16) durch das zweite Steuergerät (14, 15, 16), und Einrichten des zweiten Steuergerätes (14, 15, 16) für einen zweiten Funktionsumfang.

6. Steuergerät (10) für ein Verkehrsmittel (1), welches in einem ersten Funktionsumfang eingerichtet ist, eine Programmierung wenigstens eines zweiten Steuergerätes (14, 15, 16) des Verkehrsmittels (1) einzurichten oder zu aktualisieren und **dadurch gekennzeichnet ist, dass** es eingerichtet ist, mittels einer alternativen Programmierung für einen zweiten Funktionsumfang eingerichtet zu werden, wobei der zweite Funktionsumfang die Funktionen des ersten Funktionsumfangs nicht mehr ausführen kann und stattdessen das Steuergerät (10) gemäß dem zweiten Funktionsumfang erstmalig oder erneut Funktionen umfasst, wie sie für einen regulären Betrieb des Verkehrsmittels (1) vorgesehen sind.

7. Steuergerät (10) nach Anspruch 6,
wobei das Steuergerät (10) über einen Kommunikations-Bus (13) mit dem zweiten Steuergerät (14, 15, 16) verbunden werden kann und eine Schnittstelle (11) zur Herstellung einer Kommunikationsverbindung (3) mit einer externen Datenverarbeitungsanlage (2) oder einem externen Datenspeicher (2) aufweist, wobei die Schnittstelle (11) eine höhere mögliche Datenübertragungsrate als der Kommunikations-Bus (13) aufweist.

8. Steuergerät (10) nach Anspruch 6 oder 7,
wobei das Steuergerät (10) ein Gateway-Steuergerät (10) oder ein Motorsteuergerät (10) ist, und/oder
wobei das Steuergerät (10) zur Speicherung von der externen Datenverarbeitungsanlage (2) oder dem externen Datenspeicher (2) auf das Steuergerät (10) übertragener Daten zur Einrichtung und/oder Aktualisierung weiterer Steuergeräte (14, 15, 16) einen Speicher (12) aufweist oder mit einem internen Speicher (12) verbunden ist.

9. Verkehrsmittel (1), insbesondere Fahrzeug (1), mit
einem Steuergerät (10) nach einem der Ansprüche 6 bis 8.

10. System, mit
einem Steuergerät (10) eines Verkehrsmittels (1) nach einem der Ansprüche 6 oder 8,
einer externen Datenverarbeitungsanlage (2) oder einem externen Datenspeicher (2), und
einem Kommunikations-Bus (13) des Verkehrsmittels (1), der das Steuergerät (10) und die externe Datenverarbeitungsanlage (2) oder den externen Datenspeicher (2) miteinander verbindet.

## Claims

1. Method for setting up and/or updating programming of a second control device (14, 15, 16) of a means of transport (1), in particular during production of the means of transport (1), having the steps of:
operating a first control device (10) of the means of transport (1) in a first range of functions for setting up and/or updating the programming of the second control device (14, 15, 16) of the means of transport (1),
setting up or updating (104) the programming of the second control device (14, 15, 16) by means of the first control device (10),
**characterized by**
setting up (106) the first control device (10) for a second range of functions, wherein the second range of functions can no longer perform the functions in the first range of functions and instead the first control device (10) according to the second range of functions comprises functions for the first time or again such as those provided for regular operation of the means of transport (1).

2. Method according to Claim 1, also having the step of:
setting up or updating (102) programming of the first control device (10) by means of an external data processing system (2) or an external data memory (2).

3. Method according to Claim 2, also having the steps of:
disconnecting (105) a communication connection (3) between the external data processing system (2) or the external data memory (2) and the first control device (10) before the setting-up or updating (104) of the programming of the second control device (14, 15, 16) by means of the first control device (10) has been concluded.

4. Method according to one of the preceding claims, also having the step of:
identifying (103) the second control device (14, 15, 16) as a control device (14, 15, 16) to be set up or updated by means of the first control device (10) .

5. Method according to one of the preceding claims, also having the steps of:
operating the second control device (14, 15, 16) in a first range of functions for setting up and/or updating programming of a third control device (14, 15, 16) of the means of transport (1),
setting up or updating the programming of the third control device (14, 15, 16) by means of the second control device (14, 15, 16), and
setting up the second control device (14, 15, 16) for a second range of functions.

6. Control device (10) for a means of transport (1), which is set up, in a first range of functions, to set up or update programming of at least one second control device (14, 15, 16) of the means of transport (1) and is **characterized in that** it is set up, by means of alternative programming, to be set up for a second range of functions, wherein the second range of functions can no longer perform the functions in the first range of functions and instead the control device (10) according to the second range of functions comprises functions for the first time or again such as those provided for regular operation of the means of transport (1).

7. Control device (10) according to Claim 6,
wherein the control device (10) can be connected to the second control device (14, 15, 16) via a communication bus (13) and has an interface (11) for establishing a communication connection (3) to an external data processing system (2) or to an external data memory (2), wherein the interface (11) has a higher possible data transmission rate than the communication bus (13).

8. Control device (10) according to Claim 6 or 7,
wherein the control device (10) is a gateway control device (10) or an engine control device (10), and/or wherein the control device (10) has a memory (12) or is connected to an internal memory (12) for the purpose of storing data for setting up and/or updating further control devices (14, 15, 16), which data are transmitted from the external data processing system (2) or from the external data memory (2) to the control device (10).

9. Means of transport (1), in particular vehicle (1), having
a control device (10) according to one of Claims 6 to 8.

10. System having
a control device (10) of a means of transport (1) according to either of Claims 6 and 8,
an external data processing system (2) or an external data memory (2), and
a communication bus (13) of the means of transport (1), which communication bus connects the control device (10) and the external data processing system (2) or the external data memory (2) to one another.

## Revendications

1. Procédé pour la configuration et/ou la mise à jour d'une programmation d'un deuxième appareil de commande (14, 15, 16) d'un moyen de circulation (1), en particulier pendant la production du moyen de circulation (1), comprenant les étapes suivantes :
mise en fonctionnement d'un premier appareil de commande (10) du moyen de circulation (1) dans une première gamme de fonctions pour la configuration et/ou la mise à jour de la programmation du deuxième appareil de commande (14, 15, 16) du moyen de circulation (1),
configuration ou mise à jour (104) de la programmation du deuxième appareil de commande (14, 15, 16) par le premier appareil de commande (10), **caractérisé par**
la configuration (106) du premier appareil de commande (10) pour une deuxième gamme de fonctions, la deuxième gamme de fonctions ne pouvant plus effectuer les fonctions de la première gamme de fonctions et, à la place, le premier appareil de commande (10) selon la deuxième gamme de fonctions comprend pour la première fois ou à nouveau des fonctions telles qu'elles sont prévues pour un fonctionnement régulier du moyen de circulation (1).

2. Procédé selon la revendication 1, comprenant en outre l'étape suivante :
configuration ou mise à jour (102) d'une programmation du premier appareil de commande (10) au moyen d'une installation de traitement de données externe (2) ou d'une mémoire de données externe (2).

3. Procédé selon la revendication 2, comprenant en outre les étapes suivantes :
séparation (105) d'une liaison de communication (3) entre l'installation de traitement de données externe (2) ou la mémoire de données externe (2) et le premier appareil de commande (10) avant la fin de la configuration ou de la mise à jour (104) de la programmation du deuxième appareil de commande (14, 15, 16) par le premier appareil de commande (10) .

4. Procédé selon l'une quelconque des revendications précédentes, comprenant en outre l'étape suivante : reconnaissance (103) du deuxième appareil de commande (14, 15, 16) en tant qu'appareil de commande à configurer ou à mettre à jour (14, 15, 16) par le premier appareil de commande (10).

5. Procédé selon l'une quelconque des revendications précédentes, comprenant en outre les étapes suivantes :
mise en fonctionnement du deuxième appareil de commande (14, 15, 16) dans une première gamme de fonctions pour la configuration et/ou la mise à jour d'une programmation d'un troisième appareil de commande (14, 15, 16) du moyen de circulation (1),
configuration ou mise à jour de la programmation du troisième appareil de commande (14, 15, 16) par le deuxième appareil de commande (14, 15, 16) et
configuration du deuxième appareil de commande (14, 15, 16) pour une deuxième gamme de fonctions.

6. Appareil de commande (10) pour un moyen de circulation (1) qui est prévu, dans une première gamme de fonctions, pour configurer ou mettre à jour une programmation d'au moins un deuxième appareil de commande (14, 15, 16) du moyen de circulation (1) et **caractérisé en ce qu'**il est prévu pour être configuré au moyen d'une programmation alternative pour une deuxième gamme de fonctions, la deuxième gamme de fonctions ne pouvant plus effectuer les fonctions de la première gamme de fonctions, et à la place, l'appareil de commande (10) selon la deuxième gamme de fonctions comprend pour la première fois ou à nouveau des fonctions telles qu'elles sont prévues pour un fonctionnement régulier du moyen de circulation (1).

7. Appareil de commande (10) selon la revendication 6, dans lequel l'appareil de commande (10) peut être connecté par le biais d'un bus de communication (13) au deuxième appareil de commande (14, 15, 16) et présente une interface (11) pour établir une liaison de communication (3) avec une installation de traitement de données externe (2) ou une mémoire de données externe (2), l'interface (11) présentant un taux de transfert de données possible supérieur à celui du bus de communication (13).

8. Appareil de commande (10) selon la revendication 6 ou 7,
dans lequel l'appareil de commande (10) est un appareil de commande à passerelles (10) ou un appareil de commande à moteur (10), et/ou
dans lequel l'appareil de commande (10) présente une mémoire (12) ou est connecté à une mémoire interne (12) pour la mémorisation de données transmises par l'installation de traitement de données externe (2) ou la mémoire de données externe (2) au appareil de commande (10) pour configurer et/ou mettre à jour des appareils de commande supplémentaires (14, 15, 16) .

9. Moyen de circulation (1), en particulier véhicule (1), comprenant un appareil de commande (10) selon l'une quelconque des revendications 6 à 8.

10. Système, comprenant
un appareil de commande (10) d'un moyen de circulation (1) selon l'une quelconque des revendications 6 ou 8,
une installation de traitement de données externe (2) ou une mémoire de données externe (2), et
un bus de communication (13) du moyen de circulation (1) qui relie l'un à l'autre l'appareil de commande (10) et l'installation de traitement de données externe (2) ou la mémoire de données externe (2).
